## Europäisches Patentamt

## European Patent Office

## Office européen des brevets

(11) Publication number: **0 095 800**

**B1**

(12) **EUROPEAN PATENT SPECIFICATION**

(45) Date of publication of patent specification: **12.11.86**

(51) Int. Cl.⁴: **G 11 B 17/02**

(21) Application number: **83200694.4**

(22) Date of filing: **17.05.83**

(54) Optical-disc apparatus.

<table>
<tr><td>(30) Priority: <b>27.05.82 NL 8202163</b></td><td>(73) Proprietor: <b>N.V. Philips' Gloeilampenfabrieken<br>Groenewoudseweg 1<br>NL-5621 BA Eindhoven (NL)</b></td></tr>
<tr><td>(43) Date of publication of application:<br><b>07.12.83 Bulletin 83/49</b></td><td></td></tr>
<tr><td></td><td>(72) Inventor: <b>Camerik, Eduard<br>c/o INT. OCTROOIBUREAU B.V. Prof. Holstlaan 6<br>NL-5656 AA Eindhoven (NL)</b></td></tr>
<tr><td>(45) Publication of the grant of the patent:<br><b>12.11.86 Bulletin 86/46</b></td><td></td></tr>
<tr><td>(84) Designated Contracting States:<br><b>DE FR GB IT</b></td><td>(74) Representative: <b>Van Weele, Paul Johannes Frits<br>et al<br>INTERNATIONAAL OCTROOIBUREAU B.V. Prof.<br>Holstlaan 6<br>NL-5656 AA Eindhoven (NL)</b></td></tr>
<tr><td>(56) References cited:<br><b>EP-A-0 070 557<br>DE-A-2 909 099<br>GB-A-2 023 768<br>US-A-4 232 870</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an optical-disc apparatus for playing back and/or recording information on a rotary optical disc having a central hole, which apparatus comprises:

— a spindle with a free end, which spindle is rotatable about an axis of rotation,
— an aligning member for supporting the disc in a plane perpendicular to said axis, the aligning member being secured to said spindle,
— a centering member mounted on said spindle with a centering surface which is shaped to engage in the central hole of the disc,
— a disc loader having a first, thrust portion which during operation exerts pressure on the optical disc when the disc is supported by said aligning member, a second portion and a central portion between the first and second portions, which central portion has a maximum transverse dimension smaller than that of the first portion and that of the second portion,
— a support having an opening through which the central portion of the disc loader extends with clearance, which support is movable between a rest position in which it carries the disc loader and an operating position in which it allows the disc loader to rotate freely with the disc, the support being cooperable with the second portion of the disc loader to move said disc loader away from the aligning member when the support is moved from the operation position to the rest position, and
— magnetic means clamping the disc loader in the rest position and for magnetically urging the disc loader against the disc during operation.

An optical-disc apparatus of this kind is known from German Offenlegungsschrift 2909099.

This known apparatus is an optical video-disc player which is equipped with a cover which can be swung open from an operating position in which it is closed, to allow a disc to be placed on or removed from the spindle. The cover functions as the support for the disc loader. The support is provided with a permanent magnet and the thrust portion of the disc loader is ferro-magnetic. This construction clamps magnetically the disc loader in a fixed position relative to the support when the support is in the rest position. A further magnet, stronger than the magnet of the support, is arranged on a flanged-shaped disc drive member of the spindle in such a way that when the support is moved from the rest position to the operating position, the disc loader is magnetically clamped against the disc laying on the spindle, so that the disc is pressed against the said disc drive member. The further magnet arranged on the disc drive member must have a certain minimum strength so as to exceed the magnetic attractive forces between the disc loader and the support and to press the disc onto the centring member of the spindle when the support moves from the rest position to the operating position. By that and because the air gap between the ferro-magnetic loader and the further magnet is minimized in the ultimate operating position of the support the known device has the disadvantage that during operation the spindle may be subjected to an axial load which is greater than is necessary for retaining the disc.

The invention aims at providing an optical-disc apparatus of the type mentioned in the opening paragraph which does not have this disadvantage. The invention is characterized in that the magnetic means comprise first and second ferromagnetic members at least one of which is a magnet and which are arranged one on the second portion of the disc loader and the other on the support, said ferromagnetic members being effective in such a manner that when the support moves from the rest position towards the operating position, said ferromagnetic members initially clamp the second portion of the disc loader against the support with sufficient initial magnetic force for the thrust portion of the disc loader to engage the disc and push it over said centering surface to position the disc on the aligning member, and in such a manner that as the support moves into the operating position the ferromagnetic members are pulled from each other due to relative movement between the disc loader and the support so as to form an air gap between the ferromagnetic members determining a magnetic force lower than the initial force on said disc loader so as to maintain the thrust portion of the disc loader in clamping engagement with the disc during operation.

The invention has the advantage that when the disc loader is lowered onto the disc it adheres to the magnet so that a high initial press-down force occurs. When the support is moved further to its ultimate operating position a maximal force is initially exerted on the disc. At a given instant the disc loader is pulled off the magnet and an air gap is formed between the magnet and the cooperating position of the disc loader. As a result of this the force exerted on the disc loader is reduced. During operation the discs loader exerts a smaller force on the disc than when the disc is being pressed onto the centring member. This has the additional advantage that during operating the spindle is subjected to an axial force which is no greater than is necessary for retaining the disc. A greater force is produced only temporarily when the disc is being pressed onto the centring member.

A favourable construction of the clamping device in the apparatus of the invention described in the foregoing paragraph is obtained in an embodiment which is characterized in that one of said first and second ferromagnetic members being ring-shaped and arranged on the second portion of the disc loader and the other being annular and being mounted rigidly on the support and concentrically surrounding the central portion of the disc loader.

This embodiment comprises few components and has the further advantage that the second portion of the disc loader co-operates with a large surface area of the magnet and is consequently retained with a comparatively strong attractive force in the rest position of the support, thereby enabling a comparatively strong force to be exerted on the disc when it is pressed onto the centring member.

It is advantageous to use an embodiment of the invention which, in addition to the permanent-magnetic means of the invention described in the foregoing, comprises permanent-magnetic means which are known from the previously mentioned DE—A—2909099 and which comprise means for exerting a magnetic tensile force which acts between the spindle and the disc loader. Thus, in this embodiment magnetic forces act both between the spindle and the disc loader—which forces do not subject the spindle to an axial load during operation—and between the disc loader and the support. This embodiment comprises two different kinds of magnetic means and during operation two different air gaps are formed between portions of the disc loader and the magnetic means. This has the advantage that a greater freedom of design is obtained as regards the choice of the magnetic means, the forces required for pressing the disc onto the centring means, the clamping forces obtaining during operation, and the axial load to which the spindle is subjected.

The invention will now be described in more detail, by way of example, with reference to the drawings, in which:

Figure 1 is a perspective view of an optical-disc apparatus in the form of a video-disc player comprising a cover and a clamping device for clamping a video disc on a spindle,

Figure 2 shows a detail of Figure 1 on an enlarged scale,

Figure 3 is a cross-section of a centring member which is manufactured integrally from a plastics material,

Figures 4a, b and c show a detail of Figure 3 on an enlarged scale and a video disc in different positions as it is being pressed onto the centring member,

Figure 5 is a graph illustrating a spring characteristic of the centring member shown in Figure 4,

Figure 6. is a sectional view of the clamping device of the video-disc player shown in Figure 1 in a first embodiment of the invention,

Figure 7 is a view similar to Figure 6 of a second embodiment of the invention.

In the various Figures corresponding parts bear the same reference numerals.

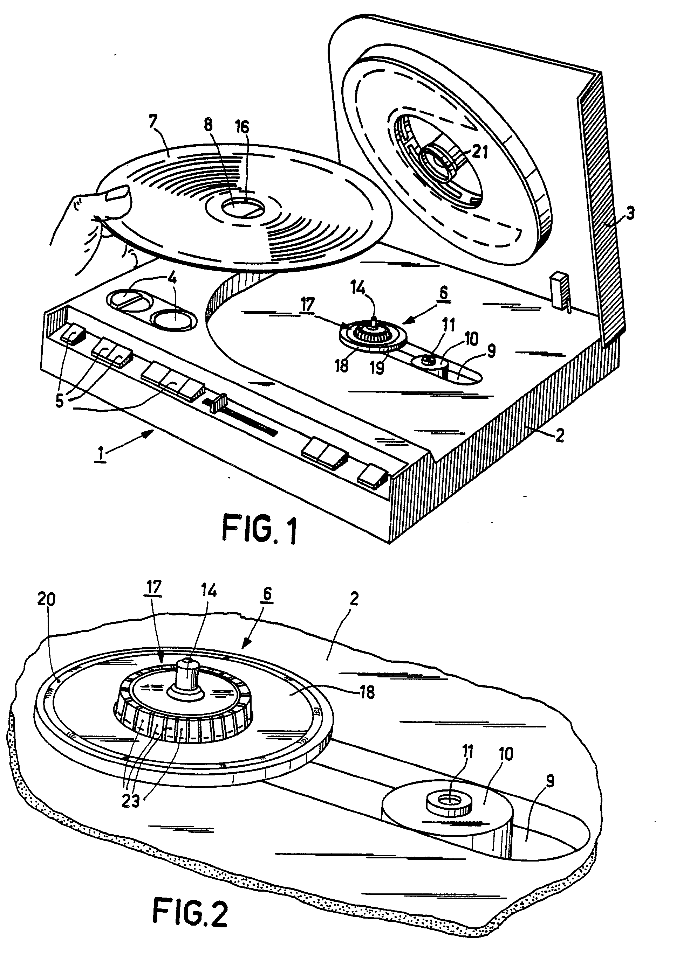

The video-disc player 1 shown in Figure 1 comprises a housing 2 and a support of the form of a hinged cover 3. At the front of the housing there is arranged a number of keys 4 and 5 for the actuation of the various functions of the apparatus. At a central location there is arranged a centring device 6 for centring and aligning a video disc 7, which disc has a central aperture 8. The disc can be placed on the centring device 6 and when it has been clamped in position by means of a clamping device to be described later herein, can be rotated at a required speed of 1500 or 1800 revolutions per minute, depending on whether the mains frequency is 50 or 60 Hz. Adjacent the centring device a radial slot 9 is formed in the upper wall of the housing 2, in which slot a focusing device 10 is movable in a radial direction by means, not shown, which are accommodated in the housing. The focusing device comprises an objective 11 by means of which a light beam from a laser source, not shown, can be focused onto the lower surface of a disc and by means of which the light reflected by the disc can be transmitted to photo electric information-detection means inside the housing 2.

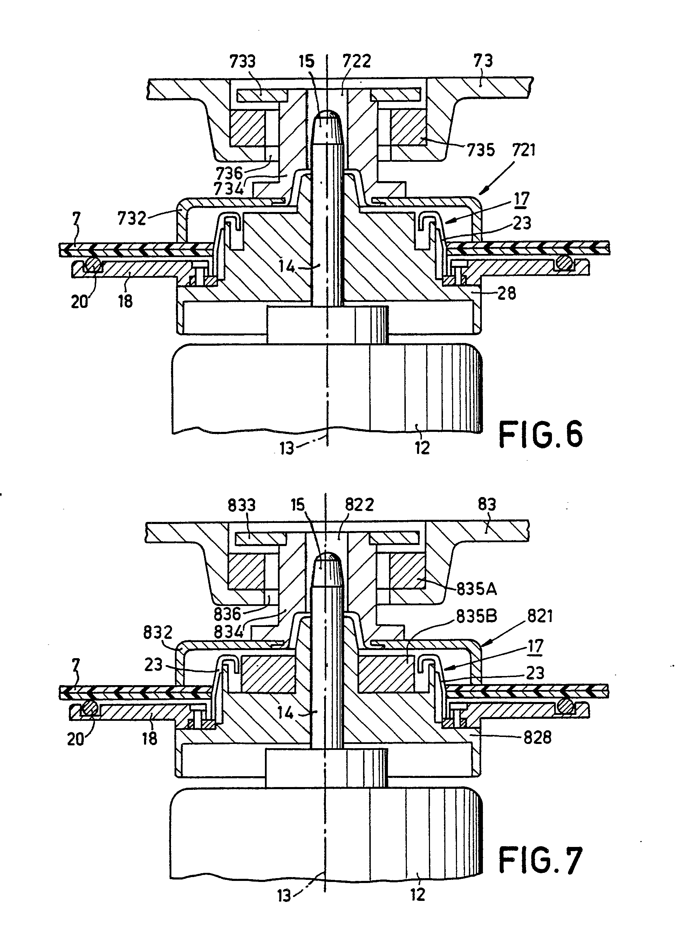

A drive motor 12 (see Figure 6) comprises a spindle 14 which is rotatable about an axis of rotation 13 and which has a slightly tapered free end 15. Surrounding the spindle 14 is a centring member 17 which co-operates with the wall 16 of the central aperture 8 of the video disc 7 in the operating position of the disc. The spindle 14 also carries a disk aligner 18, which takes the form of a flange, for aligning the disc in a plane perpendicular to the axis of rotation of the spindle. The video disc is positioned on the hard-rubber ring 20 arranged in an annular groove 19 in the flange 18. The cover 3 carries a disc loader 21 which belongs to the clamping device and which can be moved to a position opposite the centring member 17 to press on the video disc in the operating position thereof for the purpose of loading the disc towards the ring 20 of the disc aligner 18 and thereby retaining the disc on the spindle. The disc loader has a bore 22 which receives the spindle 14 with clearance.

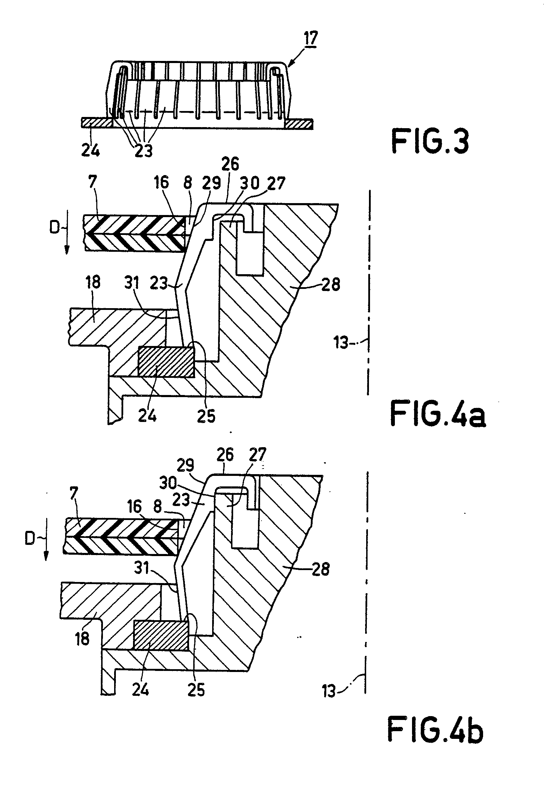

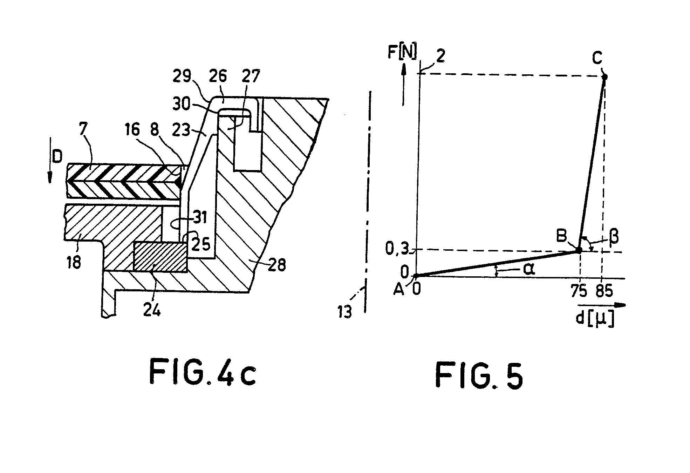

The centring member 17 comprises a ring of resilient centring elements 23 which are each radially movable between a first position (see Figure 4a) and a second position situated nearer the axis of rotation 13 (see Figure 4c). These elements have the form of leaf springs whose fixed ends are connected to the drive spindle and which, together with a retaining ring 24, are injection-moulded integrally from a plastics material (see Figure 3). The centring elements are movable against their own resilience by co-operation with the wall 16 of the central aperture 8 in the video disc 7 when this disc is placed on the drive spindle.

The centring elements 23 have an angular shape, at least at their sides which are remote from the axis of rotation 13, such that portions 29 of the elements 23 which are nearer the free end of the spindle together constitute at their outer sides an interrupted truncated cone whose diameter varies from a value less than the diameter of the central aperture of the video disc to a value greater than the diameter of this aperture. Portions 31 of the elements 23 which are further from the free end of the spindle together form at their outer sides an interrupted cylinder when the video disc is in the operating position, which cylinder has a diameter equal to the diameter of the disc aperture. The spring constant of the centring elements increases when a disc is put on.

Figures 4a to 4e show how a centring element 23 is moved from its first position to its second position when the video disc 7 is put on. Each of the centring elements has a fixed end 25 which is connected to the retaining ring 24 and a free end 26. This free end is hook-shaped and is engageable with a stop 27 which forms part of a body 28 which is shrunk onto the spindle 14. Figure 4a shows the situation in which the wall 16 of the central aperture 8 of the video disc 7 just contacts the oblique upper portion 29 of the centring element 23 when the video disc is moved downwards in the direction of the arrow D. During a further downward movement in the direction of the arrow D, as a result of the co-operation of the wall 16 of the disc aperture 8 and the centring element 23, the latter is deflected towards the axis of rotation 13 of the drive spindle until the position of Figure 4b is reached, in which a stop surface 30 of the centring element just contacts the stop 27. Between the two positions of the centring element 23 which are shown in Figures 4a and 4b this element pivots about its fixed end 25. However, when the situation of Figure 4b is reached further pivotal movement of the centring element is not possible due to the co-operation of the stop surface 30 of the centring element with the stop 27. The graph of Figure 5 shows how a pivotal force F exerted on the centring element 23 and acting towards the axis of rotation 13 varies between the situations shown in Figures 4a and 4b. At point A on the graph, which corresponds to the situation shown in Figure 4a, the force F is of course zero. At point B the situation of Figure 4b is obtained and the force is 0.3 Newtons after a displacement $d$ of 75 microns. The spring constant, which is defined as the quotient of the force F in Newtons divided by the displacement $d$ in microns, is constant over the entire range between the points A and B and is equal to tan a. Starting from the situation shown in Figure 4b, the situation of Figure 4c is eventually obtained after further displacement of the disc in the direction D to bring the disc 7 into engagement with the ring 20 in the flange 18. The deformation to which the centring element 23 is then subjected requires a greater force acting towards the axis of rotation 13, so that the required force F between points B and C on the graph of Figure 5 increases from 0.3 to 2 Newtons for a displacement of 10 microns. In this range the spring constant is tan β. During this last stage of the displacement of the disc 7 the wall 16 of the disc aperture 8 moves from the oblique upper portion 29 of the centring element onto the lower portion 31 thereof. The outer surfaces of the portions 31 of the centring elements 23 together form an interrupted cylinder in the situation shown in Figure 4d. The correct centring of the disc on the spindle is obtained by co-operation of the wall 16 of the disc aperture 8 with the portions 31 of the centring elements 23, said uninterrupted cylinder being concentric with the axis of rotation 13. The accuracy of this concentricity is improved by the cylindrical shape of the stop 27, which constitutes a cylindrical stop member mounted rigidly and coaxially on the drive spindle, for all centring elements 23. Variations in the dimensions of the disc aperture and the centring member give rise to comparatively large variations in the magnitude of the force required to press the disc over the centring member onto the ring 20.

The clamping device shown in Figure 6 comprises magnetic means in the form of a permanent magnet 735 which exerts a magnetic tensile force between the support 73 and the disc loader 721. The second portion 733 of the disc loader 721 comprises a flange-like ferro-magnetic ring. The permanent magnet 735 is an axially magnetized annular permanent magnet which is arranged concentrically with the central portion 734 of the disc loader and which is rigidly mounted on a cover which constitutes a support 73 for the disc loader. Figure 7 shows the operating position of the support 73, a small axial air gap existing between the magnet 735 and the ring 733. When the support 73 is moved upwards the ferro-magnetic ring 733 adheres magnetically to the magnet 735. When the support 73 is moved towards the operating position a comparatively strong force has to be overcome before an air gap is formed between the ferro-magnetic ring 733 and the magnet 735. This strong force, as already stated, is favourable for overcoming the force required to push the video disc 7 over the centring member 17. During operation, as a result of the presence of the air gap between the ring 733 and the magnet 735, a smaller axial force obtains, which is sufficient to clamp the video disc 7 on the flange 18 but which is no stronger than is necessary.

The clamping device shown in Figure 7 may be regarded as a combination of the clamping device used in the known video disc player described in United States Patent Specification 4,218,065 and the clamping device shown in Figure 6. The body 828 on the spindle 14 has been modified slightly and now carries a second annular magnet 835. The first portion 832 of the disc loader 821 and the second portion 833 are ferro-magnetic and the first portion is attracted by the axially magnetized annular magnet 835B in the operating position. The attracting force between the magnet 835B and the thrust portion 832 increases the clamping force with which the video disc 7 is pressed onto the ring 20 in the flange 18 without thereby increasing the axial load exerted on the spindle 14. If desired, the strength of the magnet 835A may be smaller than the strength of the permanent magnet 735 shown in Figure 6. Also the magnet 835A may be smaller in size.

Although the various embodiments of the invention have been described for a video-disc player comprising a cover which functions as support for the disc loader, the invention is not limited to such video-disc players. The invention may be used with advantage in other optical-disc apparatus. For example, the invention may be utilized in a video-disc player in which the disc is inserted through a slot in the front and in which the disc-loader support comprises a movable support arranged in the interior of the player. Moreover, the invention may be applied not only to video-disc players but also to optical disc apparatus for recording and/or reproducing audio signals, computer information etc. The construction of the clamping device may be modified in various manners without departing from the scope of the invention. The parts of the disc loader need not be of circular shape, and the permanent magnets need not be annular but may comprise, for example, a plurality of separate block-shaped magnets. Furthermore, the clamping device may be combined with a centring device of a different shape on the drive spindle, for example, the fixed cone known from United States Patent Specification 3,980,308. In such a centring device the edge of the disc aperture engages with the circumferential surface of the cone. Consequently no increased initial force is required for placing the disc correctly onto the spindle.

**Claims**

1. An optical disc apparatus for playing back and/or recording information on a rotary optical disc having a central hole, which apparatus comprises:

— a spindle (14) with a free end, which spindle is rotatable about an axis of rotation,
— an aligning member (18) for supporting the disc in a plane perpendicular to said axis, the aligning member being secured to said spindle,
— a centering member (17) mounted on said spindle with a centering surface which is shaped to engage in the central hole of the disc,
— a disc loader (721; 821) having a first, thrust portion (732; 832) which during operation exerts pressure on the optical disc when the disc is supported by said aligning member, a second portion (733; 833) and a central portion (734; 834) between the first and second portions, which central portion has a maximum transverse dimension smaller than that of the first portion and that of the second portion,
— a support (73; 83) having an opening (722; 822) through which the central portion of the disc loader extends with clearance, which support is movable between a rest position in which it carries the disc loader and an operating position in which it allows the disc loader to rotate freely with the disc, the support being cooperable with the second portion of the disc loader to move said disc loader away from the aligning member when the support is moved from the operation position to the rest position, and
— magnetic means clamping the disc loader in the rest position and for magnetically urging the disc loader against the disc during operation,

characterized in that the magnetic means comprise first and second ferromagnetic members at least one of which is a magnet (735; 835A) and which are arranged one on the second portion of the disc loader (721; 821) and the other on the support (73; 83), said ferromagnetic members being effective in such a manner that when the support moves from the rest position towards the operating position, said ferromagnetic members initially clamp the second portion of the disc loader against the support with sufficient initial magnetic force for the thrust portion (732, 832) of the disc loader to engage the disc (7) and push it over said centering surface to position the disc on the aligning member (18), and in such a manner that as the support moves into the operating position the ferromagnetic members are pulled from each other due to relative movement between the disc loader and the support so as to form an air gap between the ferromagnetic members determining a magnetic force lower than the initial force on said disc loader so as to maintain the thrust portion of the disc loader in clamping engagement with the disc during operation.

2. An optical-disc apparatus as claimed in claim 1 characterized in that said one (733; 833) of said first and second ferromagnetic members being ring-shaped and arranged on the second portion of the disc loader and the other (735; 835A) being annular and being mounted rigidly on the support and concentrically surrounding the central portion of the disc loader.

3. An optical-disc apparatus as claimed in claims 1 or 2, characterized in that the magnetic means also comprise means (835B) for exerting a magnetic tensing force which acts in known manner between the spindle (14) and the disc loader (821).

**Patentansprüche**

1. Gerät für optische scheibenförmige Aufzeichnungsträger zum Wiedergeben und/oder Aufnehmen von Information auf einer drehbaren optischen Scheibe mit einem Zentralloch, wobei dieses Gerät die folgenden Elemente aufweist:

— eine Spindel (14) mit einem freien Ende, die um eine Drehungsachse drehbar ist,
— ein Ausrichtelement (18) zum Unterstützen der Scheibe in einer Ebene senkrecht zu der genannten Achse, wobei das Ausrichtelement an der genannten Spindel befestigt ist,
— ein Zentrierelement (17), das auf der genannten Spindel angeordnet ist, mit einer Zentrieroberflächeeiner derartigen Form, dass diese mit dem Zentralloch der Scheibe zusammenarbeitet,

— einen Scheibendrücker (721; 821) mit einem ersten Druckteil (732; 832) der im Betrieb einen Druck auf die optische Scheibe ausübt, wenn die Scheibe von dem genannten Ausrichtelement unterstützt wird, und mit einem zweiten Teil (733; 833) und einem zentralen Teil (734; 834) zwischen dem ersten und dem zweiten Teil, wobei der zentrale Teil eine maximale Querabmessung hat, die kleiner ist als die des ersten Teils sowie des zweiten Teils,
— einen Träger (73; 83) mit einer Öffnung (722; 822), durch die der zentrale Teil des Scheibendrückers sich mit Spielraum erstreckt, wobei dieser Träger zwischen einer Ruhelage, in der er den Scheibendrücker trägt, und einer Betriebslage, in der der Scheibendrücker mit der Scheibe frei drehen kann, beweglich ist, wobei der träger mit dem zweiten Teil des Scheibendrückers zusammenarbeiten kann um den Scheibendrücker von dem Ausrichtelement weg zu bewegen, wenn der Träger aus der Betriebslage in die Ruhelage bewegt wird und
— Magnetmittel, die den Scheibendrücker in der Ruhelage klemmen und in der Betriebslage den Scheibendrücker magnetisch gegen die Scheibe drücken,

dadurch gekennzeichnet, dass die Magnetmittel erste und zweite ferromagnetische Elemente aufweisen, von denen wenigstens eines ein Magnet (735; 835A) ist und wobei eines an dem zweiten Teil des Scheibendrückers (721; 821) und das andere an dem Träger (73; 83) angeordnet ist, wobei die genannten ferromagnetischen Elemente derart wirksam sind, dass wenn der Träger aus der Ruhelage in die Betriebslage bewegt, die genannten ferromagnetischen Elemente zunächst den zweiten Teil des Scheibendrückers mit ausreichender magnetischer Anfangskraft gegen den Träger drücken, damit dek Druckteil (732; 832) des Scheibendrückers mit der Scheibe (7) zusammenarbeitet und diese über die genannte Zentrierfläche schiebt um die Scheibe auf das Ausrichtelement (18) zu bringen und derart, dass wenn der Träger in die Betriebslage bewegt, die ferromagnetischen Elemente durch die relative Bewegung zwischen dem Scheibendrücker und dem Träger auseinander gedrückt werden um zwischen den ferromagnetischen Elementen einen Luftspalt zu bilden, wodurch eine magnische Kraft bestimmt wird, die kleiner ist als die Anfangskraft auf den Scheibendrücker um den Druckteil des Scheibendrückers im Betrieb in klemmender Zusammenarbeit mit dem zentralen Teil des Scheibendrückers zu halten.

2. Gerät für optische scheibenförmige Aufzeichnungsträger nach Anspruch 1, dadurch gekennzeichnet, dass das genannte eine (733; 833) der genannten ersten und zweiten ferromagnetischen Elemente scheibenringförmig und auf dem zweiten Teil des Scheibendrückers angeordnet ist und das andere Element (735; 835A) ein Ringkörper ist und ortsfest an dem Träger und konzentrisch um den zentralen Teil des Scheibendrückers angeordnet ist.

3. Gerät für optische scheibenförmige Aufzeichnungsträger nach Anspruch 1 oder 2, dadurch gekennzeichnet, dass die Magnetmittel ebenfalls Mittel (835B) aufweisen, die eine magnetische Spannkraft ausüben, die auf bekannte Weise zwischen der Spindel (14) und dem Scheibendrücker (821) wirkt.

**Revendications**

1. Appareil pour disque optique servant à lire et/ou à enregistrer de l'information sur un disque optique rotatif présentant un trou central, appareil qui comporte:

— un arbre (14) présentant une extrémité libre et pouvant tourner autour d'un axe de rotation,
— un élément d'alignement (18) pour supporter le disque dans un plan perpendiculaire audit axe, élément d'alignement qui est fixé audit arbre,
— un élément de centrage (17) monté sur ledit arbre et présentant une surface de centrage de forme telle qu'elle s'engage dans le trou central du disque,
— un presse-disque (721; 821) présentant une première partie (732; 832), dite de butée, qui, en fonctionnement, exerce une pression sur le disque optique lorsque le disque est supporté par ledit élément d'alignement, une deuxième partie (733; 833) et une partie centrale (734; 834) située entre le première et la deuxième partie et ayant une dimension transversale maximale inférieure à celle de la première partie et à celle de la deuxième partie,
— un support (73; 83) présentant une ouverture (722; 822) à travers laquelle s'étend la partie centrale du presse-disque, compte tenu d'un certain jeu, support qui peut être déplacé entre, d'une part, une position de repos dans laquelle il supporte le presse-disque et, d'autre part, une position de fonctionnement dans laquelle il permet au presse-disque de tourner librement avec le disque, support qui peut coopérer avec la deuxième partie du presse-disque pour écarter ledit presse-disque de l'élément d'alignement lorsque le support est déplacé à partir de la position de fonctionnement dans la position de repos et,
— des moyens magnétiques immobilisant le presse-disque dans la position de repos et servant, en fonctionnement, à serrer le presse-disque magnétiquement contre le disque,

caractérisé en ce ce que les moyens magnétiques magnétiques comportent de premier et second éléments ferromagnétiques dont au moins un est un aimant (735; 835A) et qui sont disposés l'un sur la deuxième partie du presse-disque (721; 821) et l'autre sur le support (73; 83), lesdits éléments ferromagnétiques fonctionnant de telle manière que, si le support se déplace à partir de la position de repos dans la position de fonctionnement, ils serrent au début la deuxième partie du presse-disque contre le support en exerçant une force magnétique initiale suffisante pour que la partie de butée (732; 832) du presse-disque entre en contact avec le disque (7) et force celui-ci à passer sur ladite surface de centrage de façon à le positionner sur l'élément d'alignement (18), et cela de telle manière que, le support entrant dans la position de fonctionnement, les éléments ferromagnétiques sont écartés l'un de l'autre sous l'effet d'un mouvement relatif entre le presse-disque et le support, de sorte qu'entre les éléments ferromagnétiques, est formé un entrefer déterminant une force magnétique inférieure à la force initiale exercée sur ledit presse-disque de façon à maintenir la partie de butée du presse-disque serrée sur le disque au cours du fonctionnement.

2. Appareil pour disque optique selon la revendication 1, caractérisé en ce que l'un (733; 833) desdits premier et second éléments ferromagnétiques est annulaire et est disposé sur la deuxième partie du presse-disque et en ce que l'autre (735; 835A) est annulaire et est monté rigidement sur le support et entoure concentriquement la partie centrale du presse-disque.

3. Appareil pour disque optique selon la revendication 1 ou 2, caractérisé en ce que les moyens magnétiques comportent également des moyens (835B) pour exercer une force de traction magnétique agissant de façon connue entre l'arbre (14) et le presse-disque (821).

0 095 800

FIG.1

FIG.2

FIG.3

FIG.4a

FIG.4b

FIG. 4c

FIG. 5

FIG.6

FIG.7